# FASCICULE DE BREVET EUROPEEN

(11) **EP 3 038 118 B1**
(45) Date de publication et mention de la délivrance du brevet: **04.03.2020**
(21) Numéro de dépôt: 15202759.5
(22) Date de dépôt: 24.12.2015
(51) Int. Cl.: H01F 41/04, H01F 41/10, B29C 67/00

(54) **PROCÉDÉ DE FABRICATION D'UN DISPOSITIF ÉLECTRONIQUE COMPRENANT UN ÉLÉMENT RÉSONANT RADIOFRÉQUENCE CONNECTÉ À UN CIRCUIT INTÉGRÉ**
HERSTELLUNGSVERFAHREN EINER ELEKTRONISCHEN VORRICHTUNG, DIE EIN FUNKFREQUENZ-RESONANZELEMENT UMFASST, DAS MIT EINEM INTEGRIERTEN SCHALTKREIS VERBUNDEN IST
METHOD FOR FABRICATING AN ELECTRONIC DEVICE COMPRISING A RADIO-FREQUENCY RESONATOR CONNECTED TO A PRINTED CIRCUIT BOARD

(30) Priorité: 24.12.2014 FR 1403006
(43) Date de publication de la demande: 29.06.2016
(73) Titulaire: THALES, 92400 Courbevoie (FR)
(72) Inventeur: GUERN, Pierre, 49309 CHOLET (FR); ABELLARD, Simon, 49309 CHOLET (FR); GRIBOVALLE, David, 49309 CHOLET (FR); MAUDET, Christian, 49309 CHOLET (FR); TURPAULT, Simon, 49309 CHOLET (FR)
(74) Mandataire: Lavoix

(56) Documents cités:
- DE-U1-202007 003 747
- US-A1- 2013 027 167
- US-A1- 2014 231 266

## Description

La présente invention concerne un procédé de fabrication d'un dispositif électronique comprenant au moins un élément résonant radiofréquence connecté à un circuit intégré, le procédé comprenant une étape de fabrication d'un élément résonant radiofréquence et une étape de fixation de l'élément résonant dans une position assemblée au circuit imprimé.

L'invention concerne le domaine des dispositifs émetteurs/récepteurs d'ondes radioélectriques, c'est-à-dire d'ondes électromagnétiques dont la fréquence est comprise entre 3 kHz et 300 GHz. De tels dispositifs comprennent des circuits imprimés spécifiques, auxquels sont fréquemment intégrés des éléments résonants tels que des bobines métalliques jouant un rôle de « self-inductance ». Ces éléments résonants sont en particulier utilisés pour réaliser des fonctions de filtrage fréquentiel d'un signal électrique.

La tendance actuelle est de réduire au maximum les dimensions des dispositifs émetteurs/récepteurs d'ondes radioélectriques, afin de faciliter leur intégration dans des systèmes complexes et, souvent, mobiles. Il en résulte des contraintes importantes lors de la phase de conception d'un tel produit, afin de minimiser l'encombrement des différents composants électroniques qui le composent.

Dans ce contexte, il est intéressant de disposer d'éléments résonants de formes adaptées, en fonction des autres composants du dispositif et de leur disposition, afin de minimiser l'encombrement total. Au cours de la phase de conception, plusieurs géométries peuvent être envisagées et testées avant d'arriver à une solution satisfaisante, aussi bien sur le plan de l'encombrement que des performances électriques. Par exemple, une bobine de forme elliptique dont le grand axe est horizontal aura une épaisseur totale inférieure à celle d'une bobine de forme cylindrique.

Les conducteurs utilisés présentent généralement une section cylindrique, afin de maximiser le facteur de qualité du circuit. Toutefois, pour certaines applications, d'autres géométries seront préférées, pour satisfaire des contraintes d'encombrement ou de fixation au circuit imprimé, par exemple.

Enfin, les éléments résonants radiofréquence ont fréquemment des dimensions très réduites, de l'ordre de quelques millimètres, et sont fréquemment déformables sous l'effet de leur propre poids ou de vibrations mécaniques. Il est donc important de prévoir des éléments de maintien permettant d'éviter cette déformation.

Les bobines sont habituellement rigidifiées en enroulant un conducteur métallique autour d'un mandrin ayant une forme appropriée. Cependant, ce procédé de fabrication, s'il est bien adapté pour des bobines de forme et de section cylindriques, ne permet qu'une variété limitée de géométries de bobines. Il présente en particulier le risque de déformer le conducteur, si la section du conducteur n'est pas strictement cylindrique lors de l'enroulement. De plus, le procédé de fabrication par enroulement ne permet pas d'intégrer facilement des éléments additionnels tels que des éléments de maintien lors de la fabrication de la bobine.

US 2014/0231266 A1 décrit la fabrication de structures et de dispositifs électroniques et/ou mécanique complexes utilisant des procédés de fabrication tridimensionnelle additive homogènes ou inhomogènes.

US 2013/0027167 A1 décrit un circuit imprimé comprenant une bobine à noyau d'air.

DE 20 2007 003747 U1 décrit des bobines ou des transformateurs différentiels dont l'homogénéité du champ magnétique est améliorée.

Le but de l'invention est donc de proposer un procédé de fabrication de dispositifs électroniques comprenant au moins un élément résonant radiofréquence connecté à un circuit imprimé, qui permette la réalisation aisée d'éléments résonants de formes et de sections variées.

A cet effet, l'invention a pour objet un procédé de fabrication d'un circuit intégré du type précité, dans lequel l'étape de fabrication de l'élément résonant comprend une étape d'impression tridimensionnelle d'au moins une ébauche de l'élément résonant tel que défini par les caractéristiques de la revendication 1.

Suivant d'autres aspects avantageux de l'invention, le procédé de fabrication comprend une ou plusieurs des caractéristiques suivantes, prises isolément ou suivant toutes les combinaisons techniquement possibles :
- l'étape d'impression tridimensionnelle comprend une étape de fusion laser sur lit de poudre.
- l'étape d'impression tridimensionnelle comprend une étape de dépôt de fil fondu.
- l'élément résonant comporte une bobine.
- au cours de l'étape d'impression tridimensionnelle, une saillie de maintien de l'élément résonant dans sa position assemblée est formée sur l'élément résonant, et l'étape de fixation comprend la mise en contact de la saillie de maintien et du circuit imprimé.
- lors de la fabrication de l'élément résonant, des pattes de fixation sont formées sur l'élément résonant et, lors de l'étape de fixation, les pattes de fixation sont appliquées sur des pistes de fixation complémentaires du circuit imprimé.
- l'étape d'impression tridimensionnelle comprend la fabrication d'au moins deux ébauches d'éléments résonants venues de matière les unes avec les autres.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue en perspective d'une partie d'un circuit imprimé comprenant un élément résonant radiofréquence, tel qu'une bobine, comportant des pattes de fixation de l'élément résonant au circuit imprimé ;
- la figure 2 est une vue en coupe selon le plan III d'une spire de l'élément résonant de la figure 1 ; et
- la figure 3 est une vue en perspective d'une grille portant une pluralité d'éléments résonants du type représenté sur la figure 1.

Le dispositif électronique 8 comprend un circuit imprimé 10, et au moins un élément résonant 12. Le dispositif électronique 8 est par exemple un récepteur radio. Le circuit imprimé 10 forme avec l'élément résonant 12 un circuit résonant radiofréquence ayant des fonctions de filtrage fréquentielles.

Le circuit imprimé 10 est configuré pour recevoir et supporter l'élément résonant 12. Le circuit imprimé 10 comporte un substrat 14 délimitant une face inférieure 16 et une face supérieure 18.

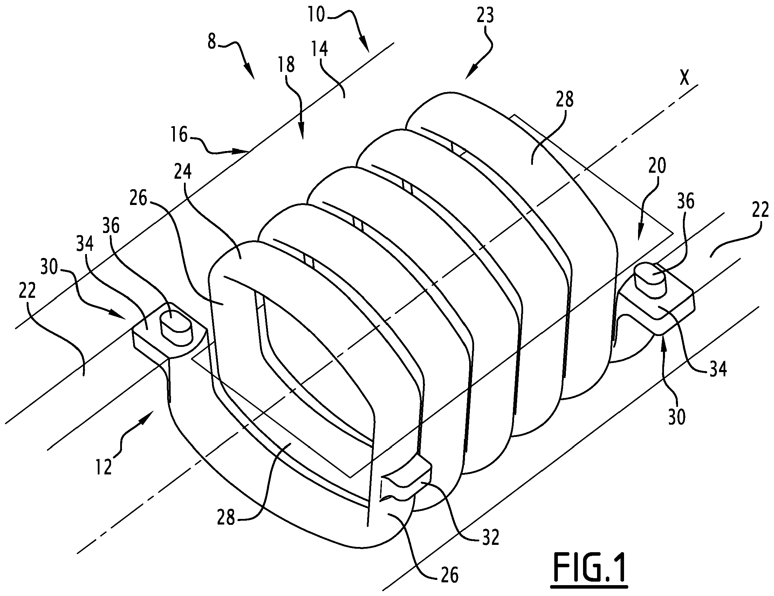

Le circuit imprimé 10 est traversé d'une ouverture 20 dans laquelle est engagé l'élément résonant 12. Sur la figure 1, l'ouverture 20 est rectangulaire.

Le circuit imprimé 10 comporte en outre au moins une piste 22 à laquelle l'élément résonant 12 est relié dans une position assemblée. Sur la figure 1, le circuit imprimé 10 comprend deux pistes 22. Les pistes connectent électriquement l'élément résonant 12 au circuit imprimé 10. Les pistes sont par exemple réalisées en un matériau métallique tel que du cuivre.

Le circuit imprimé 10 comprend également une pluralité d'éléments électroniques (non représentés). Ces éléments électroniques comportent par exemple des condensateurs, ou des amplificateurs.

Sur la figure 1, l'élément résonant 12 comporte une bobine 12. La bobine 12 comprend un corps 23 comportant une pluralité de spires 24 enroulées en hélice autour d'un axe X. L'élément résonant 12 comporte cinq spires 24.

Chaque spire 24 comporte deux portions droites 26, et deux portions courbes 28. Les portions droites 26 et les portions courbes 28 sont, par exemple, en regard l'une de l'autre. Les portions droites 26 sont verticales.

En variante, les spires 24 ont, en projection sur un plan perpendiculaire à l'axe X, une forme annulaire à base circulaire. Dans une autre variante, les spires 24 ont une forme annulaire à base rectangulaire.

L'élément résonant 12 comporte en outre à ses extrémités deux pattes 30 de fixation de l'élément résonant 12 au circuit imprimé 10 dans une position assemblée, ainsi qu'au moins une saillie 32 de maintien de l'élément résonant 2 dans la position assemblée.

En variante non représentée, l'élément résonant 12 comporte un barreau. Dans une autre variante, l'élément résonant 12 comporte une cavité résonante.

Les pattes de fixation 30 sont fixées aux pistes de fixation 22 par soudure.

Les pattes de fixation 30 sont de préférence complémentaires des pistes de fixation 22. Selon l'exemple de la figure 1, les pattes de fixation 30 comportent une languette 34 de fixation et un ergot 36 de détrompage. Lorsque l'élément résonant 12 est dans sa position assemblée, l'ergot de détrompage 36 est reçu dans un trou de détrompage de forme complémentaire ménagé dans le circuit imprimé 10.

La languette de fixation 34 est par exemple rectangulaire. La languette de fixation 34 est venue de matière avec la spire 24.

L'ergot de détrompage 36 est de préférence complémentaire du trou de détrompage. Sur la figure 1, l'ergot de détrompage 36 est cylindrique à base ovale. En variante, l'ergot de détrompage 36 est cylindrique à base circulaire.

L'ergot de détrompage 36 est venu de matière avec la languette de fixation 34.

La saillie de maintien 32 est en appui contre la face inférieure 16 pour maintenir l'élément résonant 12 dans sa position assemblée. Sur la figure 1, la saillie de maintien 32 est ménagée sur une portion droite 26 en regard d'une patte de fixation 30.

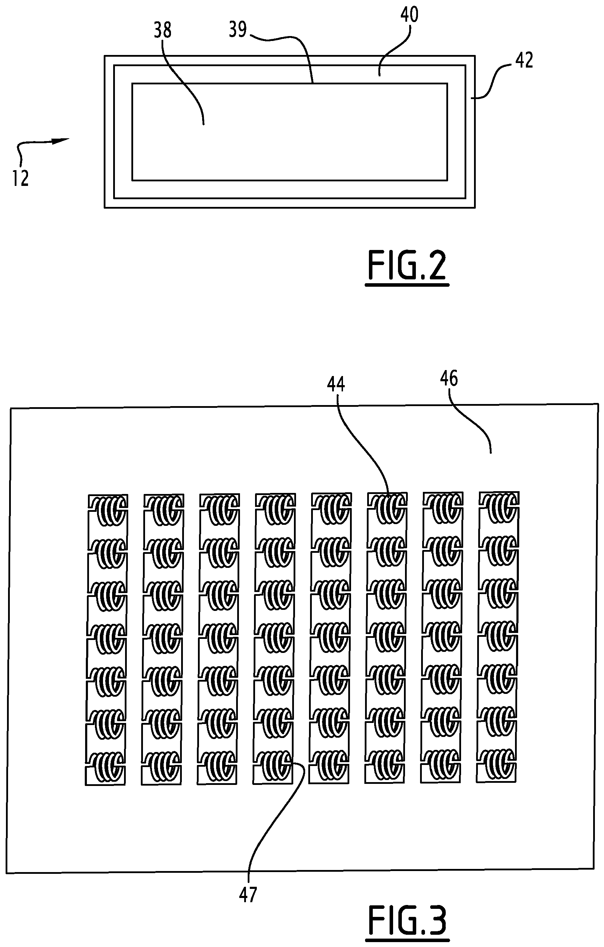

Selon l'exemple de la figure 2, l'élément résonant 12 comporte une âme 38 recouverte d'une sous-couche 39, un revêtement 40 conducteur et une couche de protection 42.

L'âme 38 est commune au corps 23, aux pattes de fixation 30 et à la saillie de maintien 32. Ainsi, le corps 23, les pattes de fixation 30 et la saillie de maintien 32 sont formés par la réunion de l'âme 38, de la sous-couche d'accrochage 39, du revêtement 40 et de la couche de protection 42.

L'âme 38 présente par exemple une section rectangulaire. En variante, l'âme 38 présente une section circulaire ou elliptique.

De préférence, l'âme 38 présente une section uniforme sur toute la longueur de l'élément résonant 12.

L'âme 38 est, par exemple, réalisée dans un matériau électriquement isolant. Par exemple, l'âme 38 est réalisée dans un matériau plastique. La sous-couche 39 est réalisée en un matériau électriquement conducteur. Par exemple, la sous-couche 39 est une couche d'une peinture électriquement conductrice.

Le revêtement 40 est délimité d'une part par la sous-couche d'accrochage 39 et d'autre part par la couche de protection 42. Le revêtement 40 est avantageusement réalisé en un matériau électriquement conducteur. De préférence, le revêtement 40 est réalisé en un matériau métallique. Par exemple, le revêtement 40 est réalisé en cuivre. En variante, le revêtement 40 est réalisé en argent.

Le revêtement 40 mesure avantageusement entre 1 µm et 100 µm d'épaisseur. L'épaisseur du revêtement 40 est avantageusement choisie en fonction de la fréquence de fonctionnement du dispositif électronique 8. Par exemple, le revêtement 40 mesure 50 µm d'épaisseur lorsque la fréquence est de l'ordre de 100 MHz. Le revêtement 40 présente, de préférence, une épaisseur uniforme.

La couche de protection 42 est de préférence réalisée en un matériau électriquement conducteur. La couche de protection 42 est par exemple réalisée en étain. La couche de protection 42 présente, par exemple, une épaisseur égale à 1 µm. L'épaisseur de la couche de protection 42 est, de préférence, uniforme.

En variante, l'âme 38 est réalisée dans un matériau conducteur. Par exemple, l'âme 38 est réalisée en un matériau métallique. L'âme 38 est, par exemple, réalisée en cuivre.

En variante, l'âme 38 est réalisée en titane.

La fabrication du dispositif électronique 8 va maintenant être décrite.

Lors d'une étape initiale de conception assistée par ordinateur, un modèle informatique 3D d'une ébauche 44 de l'élément résonant 12 est réalisé.

Une ébauche 44 de l'élément résonant 12 est ensuite fabriquée par impression tridimensionnelle (parfois dénommée « méthode de fabrication additive ») à partir du modèle informatique 3D. L'ébauche 44 comprend l'âme 38.

Plusieurs ébauches 44 identiques sont réalisées simultanément, comme illustré sur la figure 3. Les ébauches 44 sont venues de matière les unes avec les autres et avec une grille de retenue 46 réalisée par impression tridimensionnelle avec les ébauches. De préférence, chaque ébauche 44 est liée à la grille 46 par des portions sécables 47.

L'impression tridimensionnelle est faite par un procédé de fusion laser sur lit de poudre. Cette technique consiste à faire fondre localement, de façon sélective, une couche de poudre thermoplastique d'épaisseur uniforme. Le matériau thermoplastique fondu se solidifie ensuite pour former une première tranche des ébauches 44. Une deuxième couche de poudre thermoplastique est ensuite appliquée et fondue localement grâce au laser pour former une deuxième tranche des ébauches 44. La répétition de ces étapes permet de fabriquer les ébauches 44 complètes par réalisation d'une série de tranches successives. Lorsque la dernière tranche a été réalisée, la grille 46 complétée est ensuite retirée de l'appareil de fusion laser sur lit de poudre, et nettoyée pour en enlever toutes les traces de poudre en excès. En variante, la poudre est une poudre métallique.

En variante, l'impression tridimensionnelle est faite par un procédé de dépôt de fil fondu (« Fused Deposition Modeling », FDM). Dans ce cas, la poudre est fondue et extrudée à travers une buse sous forme d'un filament. Le filament se solidifie en sortie de la buse. Le déplacement de la buse est contrôlé pour former l'ébauche 44 par addition d'une série de filaments successifs.

Lorsque les ébauches 44 sont réalisées en un matériau isolant électriquement, ou, non revendiqué un métal peu conducteur tel que le titane, la sous-couche d'accrochage 39 électriquement conductrice est ensuite appliquée sur les ébauches 44. Par exemple, la sous-couche d'accrochage 39 électriquement conductrice est réalisée par trempage de la grille 46 contenant les ébauches 44 dans un bain de peinture conductrice.

Un revêtement 40 de cuivre est ensuite déposé sur la surface des ébauches 44 par électrodéposition. La grille 46 contenant les ébauches 44 est reliée électriquement à une borne d'un générateur électrique dont la seconde borne est reliée à une électrode de cuivre. La grille 46 et l'électrode de cuivre sont alors toutes deux plongées dans une solution contenant des ions cuivre. Par application d'une différence de potentiel électrique entre la grille 46 et l'électrode de cuivre, une couche de cuivre est déposée à la surface des ébauches 44 pour former le revêtement 40.

En complément facultatif, après l'étape de dépôt du revêtement 40 sur l'ébauche 44, une couche de protection 42 en étain est déposée sur la surface du revêtement 40. Le dépôt de la couche de protection 42 est également réalisé par électrodéposition.

En variante, le dépôt de la couche de protection 42 est effectué par dépôt chimique en phase liquide.

Au cours d'une dernière étape, les ébauches 44 sont ensuite détachées de la grille 46 par découpe des portions sécables 47.

L'élément résonant 12 est ensuite fixé au circuit imprimé 10 dans sa position assemblée. Pour cela, les languettes 34 de l'élément résonant 12 sont mises en contact des pistes de fixation 22 et l'ergot de détrompage 36 est inséré dans le trou de détrompage correspondant. La saillie de maintien 32 est, en outre, mise en appui contre la face inférieure 16. L'élément résonant 12 est alors dans sa position assemblée. Dans cette position assemblée, l'élément résonant 12 est reçu dans l'ouverture 20. Les pattes de fixation 30 sont ensuite soudées aux pistes de fixation 22.

Ce procédé de fabrication permet donc d'implémenter aisément toute modification de la géométrie de l'élément résonant 12 car il n'est pas nécessaire de concevoir un outillage spécifique à la géométrie de l'élément résonant 12. Les modifications apportées au modèle informatique 3D de l'ébauche 44 sont implémentées sur l'élément résonant 12 sans création d'outillage. Ce procédé est donc particulièrement adapté à la réalisation de prototypes de façon rapide et peu chère.

Ce procédé permet, de plus, de réaliser des éléments résonants 12 ayant une grande variété de formes. En particulier, il permet de contrôler à volonté aussi bien la forme que la section des spires 24 d'une bobine 12. Il permet également de ménager, au moment de la fabrication, des pattes de fixation 30 et/ou des saillies de maintien 32 venues de matière avec l'âme 38 de l'élément résonant 12. Il n'est donc pas nécessaire de prévoir des dispositifs de maintien additionnels. La fabrication par impression tridimensionnelle permet, de plus, de réaliser des ébauches 44 présentant des formes qui ne seraient pas réalisables par d'autres méthodes telles que le moulage.

Enfin, la fabrication d'une grille 46 portant plusieurs ébauches 44 permet la manipulation aisée des ébauches 44 malgré leur petite taille.

## Revendications

1. Procédé de fabrication d'un dispositif électronique (8) comprenant au moins un élément résonant radiofréquence (12) connecté à un circuit imprimé (10), le procédé comprenant :
- une étape de fabrication de l'élément résonant (12) ; et
- une étape de fixation de l'élément résonant (12) au circuit imprimé (10) dans une position assemblée,
l'étape de fabrication de l'élément résonant (12) comprenant une étape d'impression tridimensionnelle d'au moins une ébauche (44) de l'élément résonant (12),
l'étape de fabrication par impression tridimensionnelle comprenant la fabrication de l'ébauche (44) de l'élément résonant et le procédé comportant ensuite une étape de dépôt d'un revêtement conducteur (40) sur l'ébauche (44), l'étape de dépôt comprenant une étape de dépôt par électrolyse,
l'ébauche (44) de l'élément résonant (12) est réalisée au moins partiellement en un matériau non conducteur de l'électricité et **caractérisé en ce que** le procédé comporte une étape d'application d'une sous-couche (39) conductrice de l'électricité sur l'ébauche (44) avant le dépôt par électrolyse.

2. Procédé selon la revendication 1, dans lequel l'étape d'impression tridimensionnelle comprend une étape de fusion laser sur lit de poudre.

3. Procédé selon l'une quelconque des revendications précédentes, dans lequel l'étape d'impression tridimensionnelle comprend une étape de dépôt de fil fondu.

4. Procédé selon l'une quelconque des revendications précédentes, dans lequel l'élément résonant (12) comporte une bobine.

5. Procédé selon l'une quelconque des revendications précédentes, dans lequel, au cours de l'étape d'impression tridimensionnelle, une saillie de maintien (32) de l'élément résonant (12) dans sa position assemblée est formée sur l'élément résonant (12), et l'étape de fixation comprend la mise en contact de la saillie de maintien (32) et du circuit imprimé (10).

6. Procédé selon l'une quelconque des revendications précédentes, dans lequel, lors de la fabrication de l'élément résonant (12), des pattes de fixation (30) sont formées sur l'élément résonant (12) et, lors de l'étape de fixation, les pattes de fixation (30) sont appliquées sur des pistes de fixation (22) complémentaires du circuit imprimé (10).

7. Procédé selon l'une quelconque des revendications précédentes, dans lequel l'étape d'impression tridimensionnelle comprend la fabrication d'au moins deux ébauches (44) d'éléments résonants (12) venues de matière les unes avec les autres.

## Patentansprüche

1. Verfahren zur Herstellung einer elektronischen Vorrichtung (8), aufweisend mindestens ein Funkfrequenz-Resonanzelement (12), das mit einer gedruckten Schaltung (10) verbunden ist, das Verfahren aufweisend:
- einen Schritt des Herstellens des Resonanzelements (12); und
- einen Schritt des Befestigens des Resonanzelements (12) an der gedruckten Schaltung (10) in einer Anordnungsposition,
wobei der Schritt des Herstellens des Resonanzelements (12) einen Schritt des dreidimensionalen Druckens mindestens eines Rohlings (44) des Resonanzelements (12) aufweist,
wobei der Schritt des Herstellens durch dreidimensionales Drucken die Herstellung des Rohlings (44) des Resonanzelements aufweist, und das Verfahren danach einen Schritt des Abscheidens einer leitenden Beschichtung (40) auf dem Rohling (44) enthält, wobei der Schritt des Abscheidens einen Schritt des Auftragens durch Elektrolyse aufweist,
wobei der Rohling (44) des Resonanzelements (12) zumindest teilweise aus einem nicht elektrischleitenden Material hergestellt ist, und
**dadurch gekennzeichnet, dass** das Verfahren einen Schritt des Aufbringens einer elektrischleitenden Zwischenschicht (39) auf dem Rohling (44) vor dem Abscheiden durch Elektrolyse aufweist.

2. Verfahren gemäß Anspruch 1, wobei der Schritt des dreidimensionalen Druckens einen Schritt des Laserschmelzens auf Pulverbett aufweist.

3. Verfahren gemäß einem der vorherigen Ansprüche, wobei der Schritt des dreidimensionalen Druckens einen Schritt des Auftragens von geschmolzenem Draht aufweist.

4. Verfahren gemäß einem der vorherigen Ansprüche, wobei das Resonanzelement (12) eine Spule aufweist.

5. Verfahren gemäß einem der vorherigen Ansprüche, wobei während des Schritts des dreidimensionalen Druckens ein Haltevorsprung (32) des Resonanzelements (12) in seiner Anordnungsposition auf dem Resonanzelement (12) gebildet wird, und der Befestigungsschritt ein In-Kontakt-Bringen des Haltevorsprungs (32) und der gedruckten Schaltung (10) aufweist.

6. Verfahren gemäß einem der vorherigen Ansprüche, wobei während der Herstellung des Resonanzelements (12) Befestigungslaschen (30) auf dem Resonanzelement (12) gebildet werden und während des Befestigungsschritts die Befestigungslaschen (30) auf komplementären Befestigungsbahnen (22) der gedruckten Schaltung (10) angebracht werden.

7. Verfahren gemäß einem der vorherigen Ansprüche, wobei der Schritt des dreidimensionalen Druckens die Herstellung von mindestens zwei Rohlingen (44) von Resonanzelementen (12) zusammen aus einem Material aufweist.

## Claims

1. A method for manufacturing an electronic device (8) comprising a radiofrequency resonator (12) connected to a printed circuit board (10), the method comprising:
- a step for manufacturing the resonator (12); and
- a step for fastening the resonator (12) to the printed circuit board (10) in an assembled position,
the step for manufacturing the resonator (12) comprising a step for three-dimensional printing of at least one blank (44) of the resonator (12),
the manufacturing step by three-dimensional printing comprising manufacturing the blank (44) of the resonator (12), and the method next comprises a step for depositing a conductive coating (40) on the blank (44), the deposition step comprising an electrolysis deposition step,
the blank (44) of the resonator (12) is made at least partially from a non-electrically conductive material and **characterized in that** the method comprises a step for applying an electrically conductive sub-layer (39) on the blank (44) before the deposition by electrolysis.

2. The method according to claim 1, wherein the three-dimensional printing step comprises a laser powder bed fusion step.

3. The method according to any one of the preceding claims, wherein the three-dimensional printing step comprises a fused deposition step.

4. The method according to any one of the preceding claims, wherein the resonator (12) comprises a coil.

5. The method according to any one of the preceding claims, wherein, during the three-dimensional printing step, a maintaining protrusion (32) keeping the resonator (12) in its assembled position is formed on the resonator (12), and the fastening step comprises placing the maintaining protrusion (32) in contact with the printed circuit board (10).

6. The method according to any one of the preceding claims, wherein, during the manufacturing of the resonator (12), fastening tabs (30) are formed on the resonator (12) and, during the fastening step, the fastening tabs (30) are pressed on complementary fastening tracks (22) of the printed circuit board (10).

7. The method according to any one of the preceding claims, wherein the three-dimensional printing step comprises the manufacture of at least two blanks (44) of resonators (12) integral with one another.
